# EUROPEAN PATENT SPECIFICATION

(11) **EP 3 885 247 B1**
(45) Date of publication and mention of the grant of the patent: **03.05.2023**
(21) Application number: 21164711.0
(22) Date of filing: 24.03.2021
(51) Int. Cl.: B63B 1/28

(54) **METHOD FOR CONTROLLING THE POSITION OF A HYDROFOIL, HYDROFOIL AND APPARATUS FOR CONTROLLING THE POSITION OF SAID HYDROFOIL**
VERFAHREN ZUR STEUERUNG DER POSITION EINES TRAGFLÜGELBOOTS, TRAGFLÜGELBOOT UND VORRICHTUNG ZUR STEUERUNG DER POSITION DES TRAGFLÜGELBOOTS
PROCÉDÉ DE RÉGLAGE DE LA POSITION D'UNE AILE PORTANTE, AILE PORTANTE ET APPAREIL DE RÉGLAGE DE LA POSITION DE LADITE AILE PORTANTE

(30) Priority: 24.03.2020 IT 202000006163
(43) Date of publication of application: 29.09.2021
(73) Proprietor: Inesse Corporation Ltd, 48014 Castel Bolognese (RA) (IT)
(72) Inventor: NERI, Tiziano, 41032 Cavezzo (MO) (IT); NISINI, Eugenio, 40134 Bologna (IT)
(74) Representative: Caldon, Giuliano

(56) References cited:
- WO-A2-2005/023632
- US-A- 3 175 526

## Description

### Field of application

The present invention regards a method for controlling the position of a hydrofoil, a hydrofoil and an apparatus for controlling the position of said hydrofoil, according to the preamble of the respective independent claims.

The method, the hydrofoil and the control apparatus of the invention are intended to be advantageously employed in the nautical field for automatically controlling the position of a hydrofoil, i.e. the spatial position of the hydrofoil itself.

More particularly, the method that is the object of the present invention is advantageously employable in order to automatically drive appendages of the hydrofoil to move, so as to modify the position of the hydrofoil and in particular in order to maintain such position substantially horizontal.

The invention is therefore inserted in the context of the industrial field of the nautical industry, in the scope of production of hydrofoils and accessories thereof, and in the scope of use of such hydrofoils.

### State of the art

Known on the market are new boats, also termed "hydrofoils", which are provided with appendages mounted on the hull of the boat and projecting below with respect to such hull for the purpose of being at least partially immersed in water.

During use, such appendages are capable of interacting with a water flow in which they advance, converting the pressure resulting from the relative speed between that of advancement of the hydrofoil and that of the water flow into a lift force directed upward. In particular, the greater the advancing speed of the hydrofoil on which such appendages are mounted, the greater the resulting lift force applied to the appendages, which lifts the hull from the water surface.

More in detail, once a predetermined value of advancing speed has been exceeded, the generated lift force exceeds the weight force of the hydrofoil and the hull of the latter if lifted from the water surface up to completely emerging and obtaining a navigation condition termed "foilborne".

Such foilborne navigation allows numerous advantages. In particular, during foilborne navigation, only the appendages are immersed in water and the hydrofoil navigates with a smaller surface area with respect to a "conventional" navigation, in which also the hull is at least partially immersed in water.

The aforesaid smaller immersed surface area involves a lower hydrodynamic resistance of the water on the hydrofoil and allows the hydrofoil to reach higher navigation speeds, given the same installed motor power.

The aforesaid smaller immersed surface involves a lower hydrodynamic resistance of the water on the hydrofoil and allows the hydrofoil to reach higher navigation speeds, given the same installed motor power.

Several examples of hydrofoils of known type are described in the documents US 3886884, US 3175526 and WO 2005/023632.

In particular, patent US 3,175,526 describes a hydrofoil equipped with an electronic control unit arranged to move the appendages and adjust the advancing conditions of the hydrofoil itself to reduce as much as possible the vertical accelerations to which the passengers are subjected and to prevent the appendages from raising above the water surface and being damaged by slamming into the waves.

Specifically, this electronic control unit drives the actuators of the appendages according to information provided by a distance sensor, which is arranged to detect the distance between the hull and the water surface, by a sensor configured to measure the height of the waves, and by an accelerometer.

However, this hydrofoil of known type described in patent US 3,175,526 has proved in practice not without drawbacks, because, in particular, the control unit and the sensors are not able to provide accurate information about the position of the hydrofoil with respect to the water surface.

Moreover, the hydrofoil described in US 3886884 is provided in a per se conventional manner with a hull intended to advance on the water in a first navigation condition of conventional type, i.e. with at least one portion of such hull immersed in water.

The aforesaid hydrofoil of known type also comprises two appendages, intended to be immersed in water in order to allow the hydrofoil to navigate also in a second condition, i.e. in foilborne condition.

More in detail, the hydrofoil of known type is provided with a bow appendage and with a stern appendage, which are mounted on the hull so as to project below the hull itself in order to be immersed in water and they are spaced from each other along a main extension direction of the hull itself.

In particular, the bow appendage is rigidly mounted on the rudder blade of the hydrofoil and it is intended to always be immersed.

Otherwise, the stern appendage is rotatably mounted on the hull in proximity to its stern and is susceptible of being moved with respect to the hull itself. More in detail, the stern appendage is extended transversely to the hull, from port to starboard, and is movable around a rotation axis orthogonal to the main extension axis of the hull itself and substantially horizontal.

In particular, the aforesaid stern appendage is movable between a lifted position, in which the appendage is substantially side-by-side the hull and the hydrofoil is susceptible of navigating in a conventional manner, and a lowered position, in which the appendage projects below with respect to the hull and the hydrofoil is susceptible of navigating, once the speed threshold value has been exceeded, in foilborne condition. More in detail, in the aforesaid lifted position, the stern appendage of the hydrofoil of known type is horizontal, side-by-side the hull and it completely emerges from the water so as to not interact with the water flow lines and not generate lift.

In this situation, the hull remains at least partially immersed, allowing the aforesaid navigation of conventional type.

Otherwise, in the lowered position, the stern appendage is vertical, projects below the bottom wall of the hull and is completely immersed in water so as to interact with the water flow lines and generate lift.

In order to allow a greater control of the position of the hydrofoil i.e. so as to maintain it substantially always horizontal during the entire navigation, the hydrofoil described in US 3886884 is also provided with movable terminations mounted on the bow and stern appendages.

More in detail, each bow and stern appendage has substantially flat shape, and is placed horizontal when the appendage is immersed in water. The aforesaid terminations are plates mounted on the appendages at a rear edge thereof, i.e. directed towards the stern, in opposite direction with respect to the advancement direction. In addition, the aforesaid terminations are hinged to the corresponding appendage and are susceptible of being moved in order to vary an incidence profile (i.e. the substantially horizontal profile of the appendage which interacts with the water flow in order to convert the pressure of the water into the aforesaid lift force) of the appendage itself with the water flow lines.

In particular, the variation of the incidence profile involves a different interaction of the appendage with the water flow and then involves a different lift force developed by the appendage itself.

The hydrofoil described in US 3886884 is also provided with an electronic control apparatus programmed for automatically modifying the position of the aforesaid terminations of each appendage, in a manner such to control the position of the hydrofoil itself.

More in detail, such control apparatus of known type is provided with a plurality of sensors, in particular accelerometers and gyroscopes, which are adapted to detect the accelerations and tilts of the hull with respect to the three axes of rolling, pitch and yaw. In addition, on the basis of such detected information, the control apparatus is programmed for calculating the position in which the terminations of each appendage are placed so as to vary the lift generated by each appendage itself and hence maintain the hydrofoil substantially horizontal during navigation.

In addition, such control apparatus of known type is provided with a distance sensor, mounted on an external surface of the hull, in particular at the bottom of the hull, and adapted to detect the distance of the sensor itself (and hence of the hull) from the water surface.

The control apparatus of known type is then programmed for comparing the distance detected by the aforesaid distance sensor with a desired distance and, in the event in which the two distances do not coincide, moving the terminations of the appendages until the detected distance coincides with the desired distance.

The hydrofoil of known type briefly described up to now and the control method of known type provided in such hydrofoil have in practice demonstrated that they do not lack drawbacks.

A first drawback of the aforesaid hydrofoil of known type lies in the fact that the distance sensor of the control apparatus of the aforesaid hydrofoil is only capable of detecting the distance of a point of the hull from a point of the water surface (i.e. the distance of the point where the distance sensor is mounted on the hull from a point), which is not sufficient for knowing the actual position of the hull, and in particular the tilt of the hydrofoil with respect to the horizontal. Indeed, in the case of rolling or pitch, the distance sensor, which is centrally mounted on the bottom wall of the hull, does not detect any distance variation from the water surface.

In such condition, in order to know, and thus control, the actual position of the hydrofoil, the control apparatus of known type must also know the measurements made by the accelerometers and by the gyroscopes. Therefore, the control apparatus of known type is rather complicated and hard to use, above all for non-expert pilots.

A further drawback of the hydrofoil of known type is tied to the fact that, in the case of presence of waves, the appendage of such hydrofoil are susceptible of working in variable conditions.

More in detail, during navigation in the presence of waves, such appendages are immersed at variable depths depending on whether the appendage is crossing the crest of a wave of a trough between two consecutive waves.

In operation, such variable immersion depths correspond with variable lift forces generated by the appendages, which are susceptible of interacting with variable water pressures at a surface thereof directed upward.

In particular, in the presence of waves provided with heights greater than 10 cm, such as for example in the case of slightly rough sea, the lift variation generated by such waves is rather high and involves jolts of the hydrofoil, as well as oscillations of the hydrofoil itself with respect to the pitch and rolling axes thereof. It is clear that such navigation condition is rather unpleasant for people on board the hydrofoil, subjected to shakes, jolts and tilts.

In order to overcome the aforesaid drawback, such hydrofoil of known type provides for implementing a method for controlling the position of the hydrofoil itself, which provides for detecting the distance variation of the hull from the water surface by means of the distance sensor. In particular, such distance of the hull from the water surface corresponds with the immersion depth of the bow and stern appendages.

Subsequently, the control method of known type provides for moving the terminations of the appendages in a manner such to always maintain the hull at the same distance from the water surface, i.e. in a manner such to maintain the appendages always immersed at the same level, so as to substantially always generate the same lift force. Also such method for controlling the position of known type has however in practice demonstrated that it does not lack drawbacks.

A main drawback is tied to the fact that the aforesaid terminations are provided with dimensions much smaller than that of the appendages and that of the hull. Therefore, the movement of such terminations does not allow obtaining considerable generated lift variations and hence does not allow obtaining an optimal control of the position of the hydrofoil, especially in the presence of rather high waves or rather frequent waves.

In particular, the aforesaid poor capacity for compensation of the lift variation involves numerous jolts of the hydrofoil during navigation in the presence of waves greater than 10 cm. It is clear that a navigation with numerous jolts is particularly unpleasant for hydrofoil passengers, so much to lead the hydrofoil to exit from the foilborne condition, and hence lead to a lifting of the stern appendage. Indeed, the aforesaid hydrofoils of known type are generally moved in foilborne condition only with sea calm or nearly calm.

A further drawback of the aforesaid control method is tied to the fact that the distance sensor is not able to detect the actual distance of the two appendages from the water surface, but only of the point of the hull at which the distance sensor itself is mounted. In this condition, the measurement carried out by the distance sensor is an average measurement and does not correspond to the actual height at which the two stern and bow appendages are immersed.

The aforesaid method for controlling the position of known type is therefore not precise and unable to limit the jolts to which the hydrofoil is subjected in the presence of waves greater than 10 cm.

### Presentation of the invention

In this situation, the problem underlying the present invention is therefore that of overcoming the drawbacks manifested by the hydrofoils of known type, by providing a method for controlling the position of a hydrofoil, a hydrofoil and an apparatus for controlling the position of said hydrofoil which allow maintaining the hydrofoil itself substantially always horizontal.

A further object of the present invention is to provide a method for controlling the position of a hydrofoil, a hydrofoil and an apparatus for controlling the position of said hydrofoil which allow limiting the jolts and the tilts to which the hydrofoil is subjected during the navigation thereof, also in case of waves greater than 10 cm.

A further object of the present invention is to provide a method for controlling the position of a hydrofoil, a hydrofoil and an apparatus for controlling the position of said hydrofoil which also allow non-expert pilots to drive such hydrofoils.

A further object of the present invention is to provide a hydrofoil and an apparatus for controlling the position of said hydrofoil that are simple to use.

A further object of the present invention is to provide a hydrofoil and an apparatus for controlling the position of said hydrofoil that are entirely efficient and reliable in operation.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:
- Fig. 1 shows a perspective view of a hydrofoil, object of the present invention, in which the hydrofoil is represented with the appendages placed in a lifted position in order to execute a conventional navigation, with the hull intended to be at least partially immersed in water;
- Fig. 2 shows a further perspective view of a hydrofoil, object of the present invention, in which the hydrofoil is represented with the appendages placed in a lowered position in order to execute a foilborne navigation;

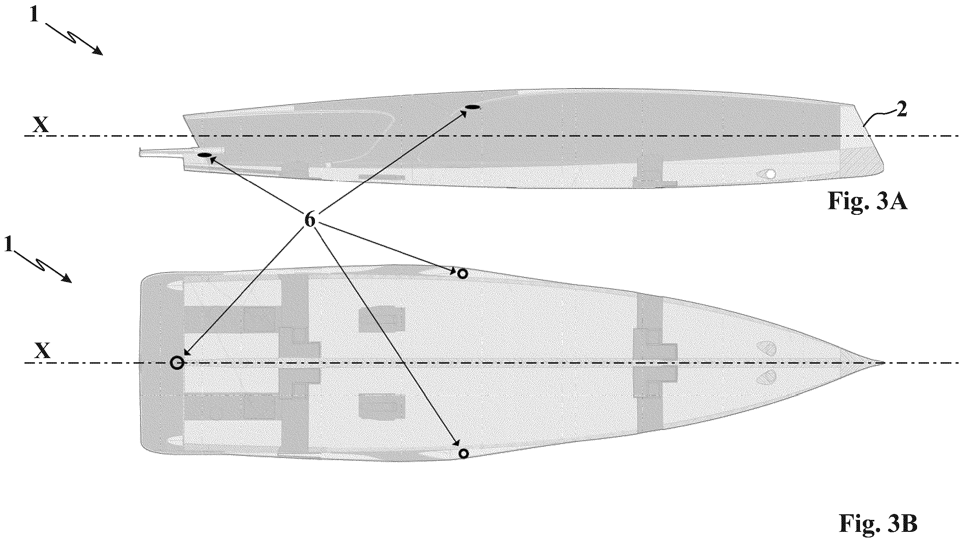

- Figs. 3A and 3B respectively show a plan view and a side view of a hydrofoil and of a control apparatus thereof, both the object of the present invention, in which the position is visible at which several sensors of the present control apparatus are mounted;
- Fig. 4 shows a function block diagram of the control apparatus, object of the present invention.

### Detailed description of a preferred embodiment

With reference to the enclosed drawings, reference number 1 overall indicates a hydrofoil, according to the present invention.

The hydrofoil 1, during use, is advantageously intended to float on a body of water, preferably with a substantially horizontal position, such position intended to be controlled by means of a method for controlling the position according to the present invention.

In particular, in the following present description, with the term "position" it will be intended the spatial position of the hydrofoil 1 and more in detail the tilt of a lying plane of such hydrofoil 1 with respect to an ideal plane, preferably horizontal, as described more in detail hereinbelow.

Advantageously, the present control method is aimed to maintain the position of the hydrofoil 1 substantially horizontal during navigation of the hydrofoil 1 itself on the body of water, regardless of the surface conditions of the water surface.

The hydrofoil 1 comprises a hull 2 provided with at least one main extension axis X, which preferably coincides with an advancement direction of the hydrofoil 1 itself along a navigation course thereof.

The hydrofoil 1 also comprises at least two appendages 4, rotatably mounted on the hull 2 and projecting below with respect to the hull 2 itself. In particular, such appendages 4 are during use intended to be at least partially immersed in water in order to generate a lift force and lift the hull 2 from the free surface of the water, allowing the hydrofoil 1 to navigate in foilborne condition.

With the term "lift", a lifting force must be intended in the present text, which is substantially directed upward, resulting from the fluid-dynamic forces that the water imparts on the aforesaid appendages 4.

The hydrofoil 1 also comprises actuator means 5 mechanically connected to the appendages 4 in order to move them with respect to the hull 2, as is better described hereinbelow.

According to the idea underlying the present invention, the present control method provides for a detection step, in which at least three distance sensors 6 mechanically mounted on an external surface of the hull 2 in three separate positions detect corresponding three distances between the distance sensors 6 themselves and three corresponding points on the water surface and generate three corresponding distance signals SD.

The present control method then provides for a first calculation step, in which an electronic control unit 7 receives the three distance signals SD and calculates a lying plane PG of the three distance sensors 6. In particular, the aforesaid lying plane PG is defined as the plane on which the three distance sensors 6 lie.

The present control method then provides for a second calculation step, in which the electronic control unit 7 compares the lying plane PG with a reference plane PR and calculates a movement position PM in which each appendage 4 is moved while the lying plane PG defined by the distance sensors 6 is substantially parallel to the reference plane PR.

In particular, the aforesaid reference plane PR is advantageously defined in design conditions of the hydrofoil 1, as a function of the distance of the three distance sensors 6 from a horizontal plane.

The present control method then provides for a driving step, in which the electronic control unit 7 generates a driving signal SC in order to drive the actuator means 5 to move each appendage 4 around a corresponding first rotation axis Y orthogonal to the main extension axis X.

In addition, the present control method provides for a movement step in which the actuator means 5 each move appendage 4 in order to reach the corresponding movement position PM in an independent manner with respect to the other appendages 4.

In operation, the aforesaid movement of the appendages 4 in the movement position PM modifies the lift force which each appendage 4 produces and consequently moves the corresponding appendage 4 substantially vertically, bringing it to emerge to be immersed in water.

Consequently, the aforesaid movement of the appendages 4 involves a corresponding movement of the hull 2 on which the appendages 4 are mounted and correspondingly moves the lying plane PG of the distance sensors 6 with respect to the reference plane PR.

Advantageously, therefore, the above-described control method allows determining, in a simple manner, the position of the hydrofoil 1 on which the three distance sensors 6 are mounted and to consequently move the appendages 4 in order to control such position and in particular in order to maintain the position of the hydrofoil 1 substantially horizontal.

Preferably, the aforesaid lying plane PG identified by the three distance sensors 6 substantially defines a lying plane of the hull 2 of the hydrofoil 1.

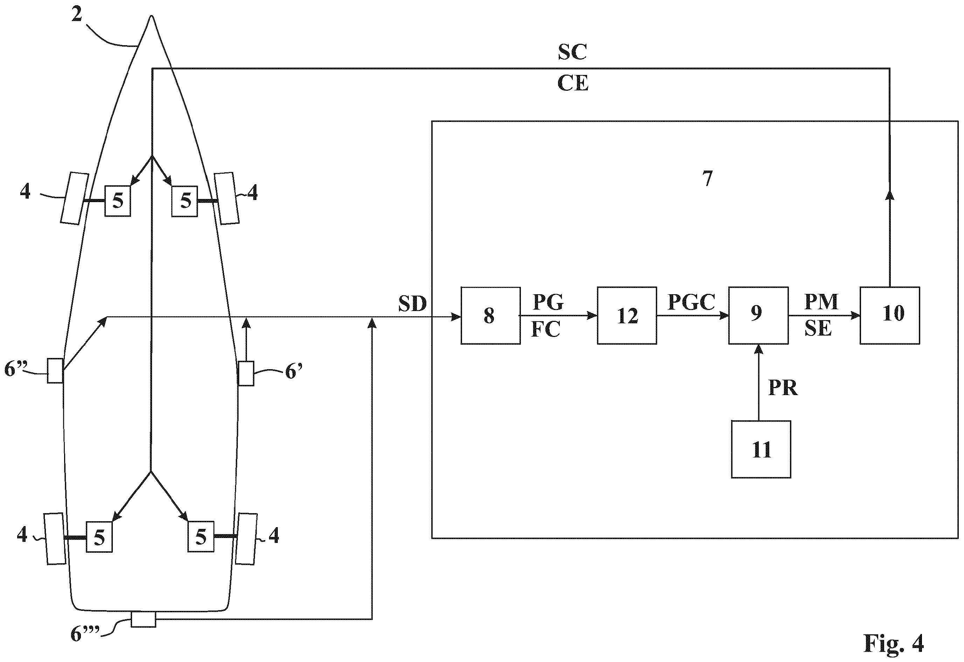

In particular, in accordance with the preferred embodiment illustrated in figure 4, the three distance sensors 6 comprise a first distance sensor 6' preferably mounted on an external surface of the hull 2 directed towards port, a second distance sensor 6" preferably mounted on an external surface of the hull 2 directed towards starboard, and a third distance sensor 6'" preferably mounted on an external surface of the hull 2 directed towards the stem.

Preferably, moreover, the three distance sensors 6 are sonar sensors, which are advantageously configured for sending sound waves towards the water surface and for detecting their distance from at least one point on the water surface as a function of the time employed by the sound wave in order to reflected by the water surface and detected by the distance sensor 6 itself.

In particular, in the aforesaid detection step, the three distance sensors 6 execute the corresponding detections substantially simultaneously.

More in detail, the three distance sensors 6 execute the corresponding detections in a synchronized manner, i.e. in other words the three distance sensors 6 are advantageously configured for carrying out the corresponding detections at the same frequency and at the same moment.

In accordance with the preferred embodiment illustrated in the enclosed figures, the three sonar sensors emit corresponding sound pulses at the same time at the same frequency, for the purpose of detecting the corresponding distances from the water surface in the same time instants.

In particular, the aforesaid detection step is executed at a detection frequency comprised between 200 Hz and 6 kHz and still more preferably at a detection frequency of about 400 Hz.

Preferably, the above-described signals, and in particular the distance signal SD and the driving signal SC, are signals of electrical type, susceptible of being processed both in reception and in emission by the electronic control unit 7.

Advantageously, the detection step provides for detecting three different plurality of distances between the three distance sensors 6 and three corresponding plurality of points on the water surface.

Advantageously, moreover, each distance signal SD generated by each of the distance sensors 6 defines a height map of a surface portion of the water surface.

In other words, each distance sensor 6 is advantageously configured for executing the distance detections within a detection area, generating a detection cone, so as to generate the aforesaid height map on the basis of the plurality of distances detected thereby, which correspond to a plurality of point distances within the detection area, in particular to the aforesaid pre-established detection frequency.

More in detail, each of the distance sensors 6 detects a distance between the sensor 6 itself and the detection area, in a manner repeated at the aforesaid detection frequency. The electronic control unit 7 receives and processes such distances detected by each sensor 6 and calculates a height map with respect to the detection time. In other words, each detected distance is associated with a precise relative position with respect to the hull 2 (which is known by the electronic control unit 7 since the sensors 6 are mounted fixed on the hull 2) and with respect to the time at which such distance was acquired. Therefore, the height map that each height sensor 6 detects is a two-dimensional map of heights with respect to the surface in the water with respect to the time.

More clearly, with the advancement of the hydrofoil 1, the detection area changes, and the detection frequency with which the height sensors 6 detect the distances is preferably sufficiently high in order to allow reconstructing the progression and the form of the water surface in a substantially continuous manner.

For example, the aforesaid detection of the height map can be executed by means of the distance sensors 6 of sonar type, which are configured for sending sound waves towards the surrounding water surface.

Advantageously, therefore, in the aforesaid first calculation step, the electronic control unit 7 calculates the shape of the water surface as a function of the plurality of distances detected by the three distance sensors 6 and generates a corresponding corrective factor FC.

In operation, in such first calculation step, the electronic control unit 7 detects the presence of possible waves which undulate the water surface and calculates the dimensions thereof.

In other words, therefore, in the absence of waves (condition which, in the technical jargon of the field is known with the term "flat sea"), the electronic control unit 7 calculates a planar shape of the water surface. Otherwise, in the presence of waves, the electronic control unit 7 calculates an undulated shape of the water surface, corresponding to the detected waves.

Advantageously, the present control method also provides for a processing step, operatively interposed between the first and the second calculation step, in which the electronic control unit 7 corrects the lying plane PG calculated in the first calculation step by applying the aforesaid corrective factor FC and obtains a corresponding corrected lying plane PGC.

Advantageously, therefore, in the second calculation step, the electronic control unit 7 compares the aforesaid corrected lying plane PGC with the reference plane PR in order to calculate the movement position PM for each appendage 4.

Advantageously, therefore, the aforesaid processing step is temporally interposed between the first and the second calculation step, in a manner such that second calculation step is executed on the basis of the corrected lying plane PGC previously calculated by the processing step.

Advantageously, moreover, starting from the shape of the water surface calculated in the first calculation step, the electronic control unit 7 determines height variations of the water surface, and in particular it determines the height of the waves with respect to a median plane of the water surface and the slope of their profiles.

In other words, the first calculation step provides for calculating the dimensions and the direction of possible waves which define the aforesaid height variations of the water surface.

Advantageously, therefore, in the first calculation step, the electronic control unit 7 calculates the corrective form factor FC as a function of the variation over time of the shape of the water surface due to the aforesaid height variations, and in particular due to the waves.

In other words, therefore, in the aforesaid calculation step, the electronic control unit not only calculates the shape of the water surface in real time, but also calculates a forecast of variation over time of the aforesaid shape, caused by the waves.

In this manner, the electronic control unit 7 is capable of correcting the lying plane PG calculated on the basis of the three distance signals SD detected in real time and obtains the corrected lying plane PGC corresponding to how the lying plane PG is modified over time by the detected height variations.

Advantageously, in this manner, the present control method also allows executing preventive movements of the appendages, aimed to compensate for future variations of the lift force generated by an appendage 4 which is about to cross a crest of a wave or a trough between two consecutive waves, so as to allow a navigation that is as pleasant as possible for passengers of the hydrofoil 1.

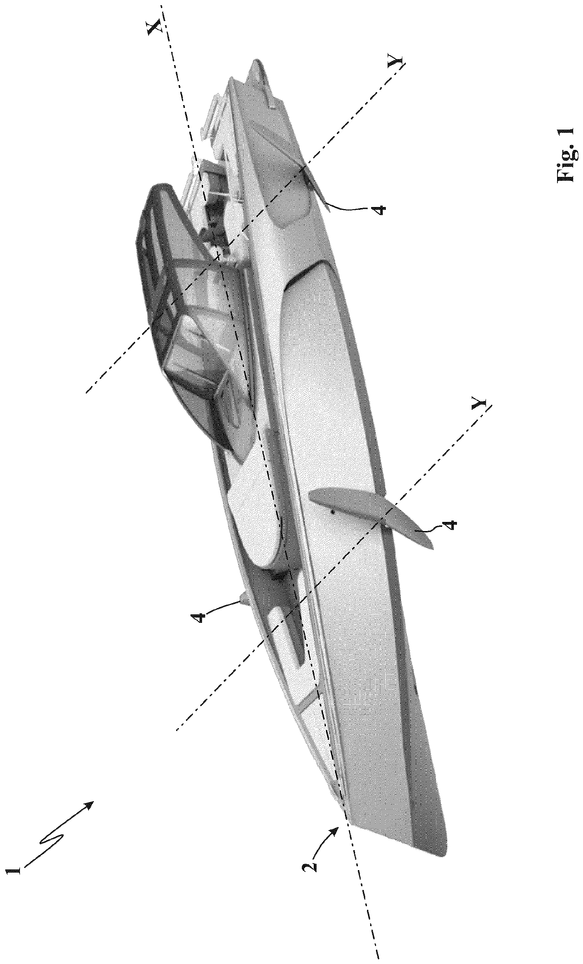

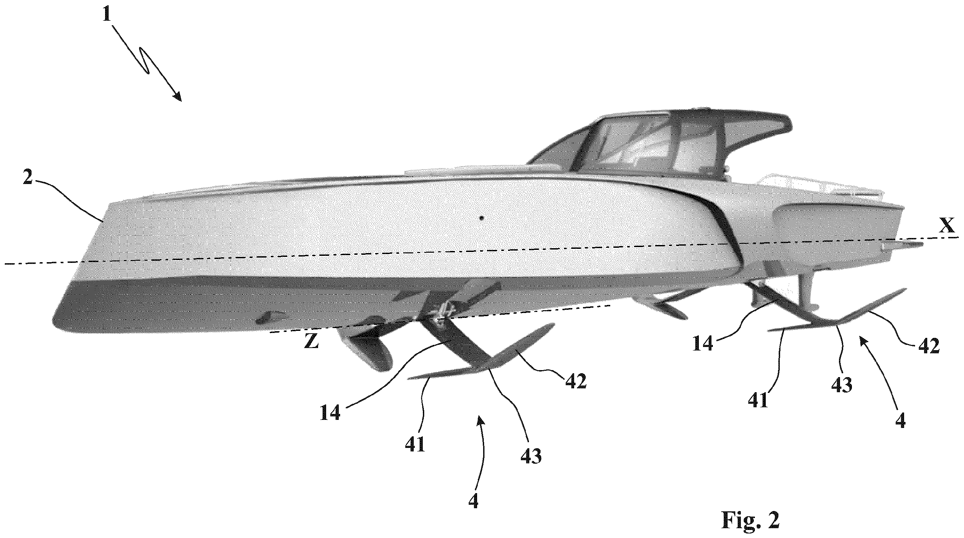

In accordance with the preferred embodiment illustrated in the enclosed figures 1 and 2, the actuator means 5 are adapted to move each appendage 4 at least in partial rotation around a second rotation axis Z, substantially parallel to the main extension axis X of the hull 2, and in particular perpendicular to the first rotation axis Y.

More in detail, such rotation around the second rotation axis Z occurs between a lowered position, in which the corresponding appendage 4 projects below with respect to the hull 2 (illustrated in the enclosed figure 2), and a raised position, in which the appendage 4 is placed side-by-side the hull 2 (illustrated in the enclosed figure 1).

In a per se known manner, the aforesaid lowered position corresponds with a navigation of the hydrofoil 1 in foilborne condition and the aforesaid raised position corresponds with a navigation of the hydrofoil 1 not in foilborne condition, i.e. in conventional condition.

Advantageously, the method for controlling the above-described position provides that, in the aforesaid first calculation step, the electronic control unit 7 compares the calculated shape of the water surface with a limit shape, which in particular corresponds with a condition beyond which it is no longer prudent to navigate in foilborne condition, such as for example in the presence of waves greater than 60 cm.

In the aforesaid first calculation step, therefore, the electronic control unit generates an emergency signal SE in the event that the shape of the water surface exceeds the limit shape.

Advantageously, in the aforesaid driving step, the electronic control unit 7 generates an emergency command CE in order to drive the actuator means 5 to move each appendage 4 in raised position at the emergency signal SE.

In other words, therefore, the present control method also provides for exiting from navigation in foilborne condition and entering into conventional navigation in case of particularly rough waters, which could make foilborne navigation dangerous.

More in detail, in order to generate the aforesaid emergency signal SE, in the calculation step the electronic control unit 7 interpolates the height maps detected by the three distance sensors 6 so as to generate a three-dimensional map of the zone of detection of the water surface. The electronic control unit 7 then compares the three-dimensional map with preset threshold values, and upon exceeding these it generates the aforesaid emergency command CE.

Advantageously, in order to avoid sudden variations of lift generated by each appendage 4, the present control method provides that, during the movement step, each appendage 4 is continuously moved up to reaching the movement position PM.

In particular, each of the aforesaid detection, calculation and driving steps (and preferably also the processing step) is preferably executed at a frequency comprised between 200 Hz and 6 kHz.

In this manner, in each second of time, a number of movement positions PM are advantageously calculated comprised between 200 and 6000, which allow moving, substantially continuously, the appendages 4 between the plurality of calculated movement positions PM. Of course, it is possible to continuously move the appendages 4 even in the event that the aforesaid steps of detection, calculation, processing and driving are executed at lower frequencies with respect to those indicated above, without departing from the protective scope of the present patent.

As indicated above, also forming the object of the present invention is a hydrofoil 1, the position of which is advantageously controllable by means of a method for controlling the position of the above-described type, regarding which the same nomenclature and the same alphanumeric references will be maintained for the sake of descriptive simplicity.

The hydrofoil 1 according to the invention comprises at least one hull 2 provided with at least one main extension axis X. In the following present discussion, reference will always be made to a hydrofoil 1 provided with only one hull 2; nevertheless, also an alternative embodiment of the hydrofoil 1 is to be intended as possible, which is provided with two or more hulls 2, without departing from the protective scope of the present patent.

The present hydrofoil 1 comprises at least two appendages 4, rotatably mounted on the hull 2 and projecting below with respect to the hull 2 itself.

In accordance with the preferred embodiment illustrated in the enclosed figures, the hydrofoil 1 comprises four appendages 4, and in particular comprises two appendages 4 mounted on a wall of the hull 2 directed towards port and two appendages 4 mounted on a wall of the hull 2 directed towards starboard.

The hydrofoil 1 also comprises actuator means 5 mechanically connected to the appendages 4 in order to move them with respect to the hull 2, as is better described hereinbelow.

According to the invention, the hydrofoil 1 comprises a control apparatus comprising a distance sensor 6 mechanically mounted on an external surface of the hull 2, i.e. on a surface of the hull 2 directed towards the water of the body of water on which the hydrofoil 1 is intended to float.

The aforesaid distance sensor 6 is configured for detecting the distance between a point of the water surface and the sensor 6 itself and for generating a corresponding distance signal SD.

In particular, the aforesaid distance sensor is preferably a sonar sensor.

According to the invention, the control apparatus of the present hydrofoil 1 also comprises at least one electronic control unit 7, mounted on the hull 2 and placed in data communication with the distance sensor 6 and with the actuator means 5.

More in detail, the electronic control unit 7 is configured in order to receive input signals from the distance sensor 6 and to calculate corresponding output signals to send to the actuator means 5 in order to move the appendages 4, as is better described hereinbelow.

According to the idea underlying the present invention, the actuator means 5 are adapted to move each appendage 4 at least in partial rotation around a corresponding first rotation axis Y, orthogonal to the main extension axis X.

In addition, the actuator means 5 are adapted to move each appendage 4 in an independent manner with respect to the other appendages 4.

In particular, the aforesaid actuator means 5 preferably comprise at least one actuator for each appendage 4 so as to move each appendage 4 independently of the remaining appendages 4. Such actuators can for example be linear actuators and preferably hydraulic pistons.

The control apparatus also comprises at least three of the aforesaid distance sensors 6, which are mechanically mounted on the external surface of the hull 2 in corresponding three separate positions and configured for detecting the distance between the distance sensors 6 and at least three corresponding points on the water surface and for generating three corresponding distance signals SD.

Preferably, all the aforesaid three distance sensors 6 are sonar sensors.

Preferably, moreover, the aforesaid at least three distance sensors 6 comprise at least one first distance sensor 6' mounted on an external surface of the hull 2 directed towards port, at least one second distance sensor 6" mounted on an external surface of the hull 2 directed towards starboard, and at least one third distance sensor 6'" mounted on an external surface of the hull 2 directed towards the stern.

The aforesaid electronic control unit 7 is also provided with a plurality of modules, a possible explanatory diagram of which is illustrated in the enclosed figure 4.

The electronic control unit 7 is provided with a first calculation module 8 programmed in order to receive the distance signals SD generated by the three distance sensors 6 and in order to calculate a corresponding lying plane PG of the three distance sensors 6.

In addition, the electronic control unit 7 is provided with a second calculation module 9 programmed for comparing the lying plane PG with a reference plane PR and for calculating a corresponding movement position PM for each appendage 4 in order to move the lying plane PG substantially parallel to the reference plane PR.

In addition, the electronic control unit 7 is provided with a driving module 10 configured in order to receive each movement position PM and generate a corresponding driving signal SC in order to drive the actuator means 5 to move each appendage 4 around the corresponding first rotation axis Y in order to reach the corresponding movement position PM.

Preferably, the electronic control unit is also provided with a memory module 11, in data communication with the second calculation module 9 and in which the aforesaid reference plane PR is stored.

In accordance with a preferred embodiment of the present hydrofoil 1, illustrated in the enclosed figure 2, each appendage 4 comprises at least one first wing 41, substantially plate-like and mainly extended along a first lying plane.

More in detail, the aforesaid first wing 41 is shaped in a manner such to allow generating lift force, for example it is shaped with a NACA shape.

Advantageously, the actuator means 5 are adapted to move each appendage 4 around the first rotation axis Y, in a plurality of positions with lift increasing between a minimum lift position and a maximum lift position.

In particular, in the position of minimum lift, the first wing 41 is placed with its first lying plane substantially parallel to the main extension axis X of the hull 2, and during use is substantially parallel to the flow lines of the water in which the first wing 41 is immersed, so as to develop the smallest possible lift force.

Advantageously, in the position of maximum lift, the first wing 41 of the corresponding appendage 4 is placed with the first lying plane tilted by a maximum tilt angle with respect to the main extension axis X of the hull 2, and during use is tilted with respect to the flow lines of the water in which the first wing 41 is immersed, by an angle such to develop the greatest possible lift force.

Each position of the appendages 4, comprised between the aforesaid positions of minimum lift and maximum lift, corresponds with a different tilt angle of the first lying plane with respect to the main extension axis X comprised between 0 degrees (corresponding to the position of minimum lift) and the value of the maximum tilt angle, and in particular, increasing tilt angles correspond with increasing lift forces.

Advantageously, the aforesaid second calculation module 9 of the electronic control unit 7 calculates the movement position PM corresponding to the lift force that each appendage 4 must generate in order to move the lying plane PG parallel to the reference plane PR.

In accordance with the preferred embodiment illustrated in the enclosed figure 2, each appendage 4 also comprises a second wing 42, substantially plate-like and extended starting from the first wing 41 along a second lying plane that is tilted with respect to the first lying plane of the first wing 41. In other words, the first and the second wing 41, 42 of each appendage 4 are placed mechanically constrained to each other to form a substantially "C" shaped profile and are joined together by an elbow 43, placed to join between the first and the second wing 41, 42, acting as a connector between the first and the second lying plane.

Preferably, each appendage 4 comprises at least one support leg 14 placed as a mechanical connection between the elbow 43 and the hull 2. More in detail, each support leg 14 is extended between a first end, fixed to the elbow 43, and a second end, rotatably mounted on the hull 2.

Advantageously, in order to move each appendage 4 towards a direction with greater lift, the first actuator means 5 are adapted to move the corresponding support leg 14 to rotate its first end towards the bow of the hydrofoil 1. Likewise, in order to move each appendage 4 towards a direction with smaller lift, the first actuator means 5 are adapted to move the corresponding support leg 14 to rotate its first end towards the stern of the hydrofoil 1.

Advantageously, moreover, in accordance with that reported above in relation to the method for controlling the hydrofoil 1, each distance sensor 6 is configured for detecting a plurality of distances therebetween and a plurality of points on the water surface, thus defining a height map of a portion of the water surface and for generating the aforesaid distance signal SD identifying the aforesaid height map.

Advantageously, the first calculation module 8 of the electronic control unit 7 is programmed for calculating the shape of the water surface as a function of the aforesaid plurality of distances detected by the distance sensors 6 and for generating a corresponding corrective factor FC.

Advantageously, the electronic control unit 7 is provided with a processing module 12, in data connection with the first and the second calculation modules 8, 9. In particular, the aforesaid processing module 12 is programmed for correcting the lying plane PG by applying the corrective factor FC and obtaining a corresponding corrected lying plane PGC to send to the second calculation module 9.

In such condition, the second calculation module 9 is thus advantageously programmed for comparing the corrected lying plane PGC with the reference plane PR so as to calculate the movement positions PM for each appendage 4.

Advantageously, moreover, the first calculation module 8 is programmed for determining height variations of the surface of the water surface, and in particular for determining waves which are elevated from a median plane of the water surface.

In particular, the first calculation module 8 is advantageously programmed for determining the dimensions and the direction of possible waves present on the water surface.

The first calculation module 8 is advantageously programmed also for calculating the aforesaid corrective factor FC in the form of a function of the variation over time of the shape of the water surface due to the aforesaid height variations.

In accordance with the preferred embodiment illustrated in the enclosed figures 1 and 2, the actuator means 5 are adapted to move each appendage 4 at least in partial rotation around a second rotation axis Z, substantially parallel to the main extension axis X between a lowered position, in which the appendage 4 projects below with respect to the hull 2 (illustrated in figure 2), and a raised position (illustrated in figure 1), in which the appendage 4 is placed side-by-side the hull 2.

Advantageously, the second calculation module 9 of the electronic control unit 7 is programmed for comparing the shape of the water surface calculated by the first calculation module 8 with a limit shape, preferably stored in the memory module 11.

In particular, the aforesaid limit shape corresponds to a condition beyond which it is no longer prudent to navigate in foilborne condition, such as for example in the presence of waves greater than 60 cm.

Advantageously, the second calculation module 9 is also programmed for generating an emergency signal SE in the event that the shape of the water surface exceeds the limit shape.

Advantageously, the driving module 10 is programmed for generating an emergency command CE in order to drive the actuator means 5 to move each appendage 4 into the raised position, corresponding with the emergency signal SE.

Also forming the object of the present invention is an apparatus for controlling the position of a hydrofoil preferably of the above-described type, regarding which the same nomenclature will be maintained for the sake of descriptive simplicity.

The control apparatus according to the invention comprises a distance sensor 6 intended to be mechanically mounted on an external surface of a hull 2 of the hydrofoil 1. The aforesaid distance sensor 6 is configured for detecting at least one distance between the distance sensor 6 itself and a point on the water surface and for generating a corresponding distance signal SD.

In addition, the control apparatus comprises at least one electronic control unit 7, intended to be mounted on the hull 2 and placed in data communication with the sensor of distance sensor 6 and with actuator means 5 of at least two appendages 4 of the hydrofoil 1.

According to the idea underlying the present invention, the present control apparatus comprises at least three of the aforesaid distance sensors 6 intended to be mechanically mounted on the external surface of said hull 2 in corresponding three separate positions and configured for detecting the distance between the distance sensors 6 themselves and at least three corresponding points on the water surface and for generating three corresponding distance signals SD.

In addition, the electronic control unit 7 is provided with a first calculation module 8 programmed in order to receive the distance signals SD generated by the three distance sensors 6 and for calculating a corresponding lying plane PG of the three distance sensors 6.

In addition, the electronic control unit 7 is provided with a second calculation module 9 programmed for comparing the lying plane PG with a reference plane PR and for calculating, for each appendage 4 of the hydrofoil 1, a corresponding movement position PM in order to move the lying plane PG substantially parallel to the reference plane PR.

In addition, the electronic control unit 7 is provided with a driving module 10 configured in order to receive each movement position PM and generate a corresponding driving signal SC in order to drive the actuator means 5 of the appendages 4 to move in an independent manner each appendage 4 at least in partial rotation around a corresponding first rotation axis Y, orthogonal to the main extension axis X in order to reach the corresponding movement position PM.

In particular, the present control apparatus is of the above-described type in relation to the hydrofoil 1, and the same above-reported considerations are valid for the same.

The method for controlling the position of a hydrofoil, the hydrofoil 1 and its control apparatus thus conceived therefore attain the pre-established objects.

## Claims

1. Method for controlling the position of a hydrofoil (1), said hydrofoil (1) comprising:
- a hull (2) provided with at least one main extension axis (X);
- at least two appendages (4), rotatably mounted on said hull (2) and projecting below with respect to said hull (2);
- actuator means (5) mechanically connected to said appendages (4) in order to move them with respect to said hull (2);
said control method being **characterized in that** it provides for:
- a detection step, in which at least three distance sensors (6) mechanically mounted on an external surface of said hull (2) in three separate positions detect three corresponding distances between said distance sensors (6) and at least three corresponding points on the water surface and generate three corresponding distance signals (SD);
- a first calculation step, in which an electronic control unit (7) receives said three distance signals (SD) and calculates a lying plane (PG) of said three distance sensors (6);
- a second calculation step, in which said electronic control unit (7) compares said lying plane (PG) with a reference plane (PR) and calculates a movement position (PM) in which each said appendage (4) is intended to be moved while said lying plane (PG) defined by said distance sensors (6) is substantially parallel to said reference plane (PR);
- a driving step, in which said electronic control unit (7) generates a driving signal (SC) in order to drive said actuator means (5) to move each said appendage (4) around a corresponding first rotation axis (Y) orthogonal to said main extension axis (X);
- a movement step in which said actuator means (5) move each said appendage (4) in order to reach the corresponding said movement position (PM) in an independent manner with respect to the other of said at least two appendages (4).

2. Control method according to claim 1, **characterized in that** said distance sensors (6) are sonar sensors.

3. Control method according to claim 1 or 2, **characterized in that** said detection step provides for detecting three different pluralities of distances between said distance sensors (6) and three corresponding pluralities of points on the water surface;
each said distance signal (SD) generated by each of said distance sensors (6) defining a height map of a surface portion of the water surface.

4. Control method according to claim 3, **characterized in that**, in said first calculation step, said electronic control unit (7) calculates the shape of the water surface as a function of the pluralities of distances detected by said three distance sensors (6) and generates a corresponding corrective factor (FC);
said control method also providing for a processing step, operatively interposed between said first calculation step and said second calculation step, in which said electronic control unit (7) corrects said lying plane (PG) by applying said corrective factor (FC) and obtains a corresponding corrected lying plane (PGC);
in said second calculation step, said electronic control unit (7) comparing said corrected lying plane (PGC) with said reference plane (PR) in order to calculate said movement position (PM) for each said appendage (4).

5. Control method according to claim 4, **characterized in that**, in said first calculation step, said electronic control unit (7) causes height variations of said surface of the water surface and calculates said corrective factor (FC) in the form of a function of the variation over time of said shape of the water surface due to said height variations.

6. Control method according to claim 4 or 5, wherein said actuator means (5) are adapted to move each said appendage (4) at least in partial rotation around a second rotation axis (Z), substantially parallel to the main extension axis (X), between:
- a lowered position, in which said appendage (4) projects below with respect to said hull (2), and
- a raised position, in which said appendage (4) is placed side-by-side said hull (2); said method being **characterized in that**:
- in said first calculation step, said electronic control unit (7) compares said shape of the water surface with a limit shape and generates an emergency signal (SE) if said shape of the water surface exceeds said limit shape;
- in said driving step, said electronic control unit (7) generates an emergency command (CE) for driving said actuator means (5) to move each said appendage (4) into said raised position at said emergency signal (SE).

7. Control method according to any one of the preceding claims, **characterized in that** in said movement step, each said appendage (4) is continuously moved up to reaching said movement position (PM).

8. Control method according to any one of the preceding claims, **characterized in that** said detection, calculation and driving steps are executed at a frequency comprised between 200 Hz and 6 kHz.

9. Hydrofoil (1) comprising:
- a hull (2) provided with at least one main extension axis (X);
- at least two appendages (4), rotatably mounted on said hull (2) and projecting below with respect to said hull (2);
- actuator means (5) mechanically connected to said appendages (4) in order to move them with respect to said hull (2);
- a control apparatus comprising:
- at least one distance sensor (6) mechanically mounted on an external surface of said hull (2) and configured for detecting the distance between said distance sensor (6) and a corresponding point on the water surface and for generating a corresponding distance signal (SD),
- at least one electronic control unit (7), mounted on said hull (2) and placed in data communication with said distance sensor (6) and with said actuator means (5);
said hydrofoil (1) being **characterized in that:**
- said actuator means (5) are adapted to move each said appendage (4) at least in partial rotation around a corresponding first rotation axis (Y), orthogonal to said main extension axis (X); said actuator means (5) being adapted to move each of said at least two appendages (4) independently with respect to the other of said at least two appendages (4);
- said control apparatus comprises at least three said distance sensors (6) mechanically mounted on the external surface of said hull (2) in three corresponding separate positions and configured for detecting the distance between said distance sensors (6) and at least three corresponding points on the water surface and for generating three corresponding distance signals (SD);
- said electronic control unit (7) is provided with:
- a first calculation module (8) programmed for receiving said distance signals (SD) generated by said three distance sensors (6) and for calculating a corresponding lying plane (PG) of said three distance sensors (6),
- a second calculation module (9) programmed for comparing said lying plane (PG) with a reference plane (PR) and for calculating a corresponding movement position (PM) for each said appendage (4) in order to move said lying plane (PG) substantially parallel to said reference plane (PR),
- a driving module (10) configured for receiving each said movement position (PM) and generating a corresponding driving signal (SC) in order to drive said actuator means (5) to move each said appendage (4) around the corresponding said first rotation axis (Y) in order to reach the corresponding said movement position (PM).

10. Apparatus for controlling the position of a hydrofoil (1), said control apparatus comprising:
- a distance sensor (6) intended to be mechanically mounted on an external surface of a hull (2) of said hydrofoil (1) and configured for detecting at least one distance between said distance sensor (6) and a point on the water surface and for generating a corresponding distance signal (SD);
- at least one electronic control unit (7), intended to be mounted on said hull (2) and placed in data communication with said distance sensor (6) and with actuator means (5) of at least two appendages (4) of said hydrofoil (1);
said control apparatus being **characterized in that** it comprises at least three of said distance sensors (6) intended to be mechanically mounted on the external surface of said hull (2) in three corresponding separate positions and configured for detecting the distance between said distance sensors (6) and at least three corresponding points on the water surface and for generating three corresponding distance signals (SD);
and **in that** said electronic control unit (7) is provided with:
- a first calculation module (8) programmed for receiving said distance signals (SD) generated by said three distance sensors (6) and for calculating a corresponding lying plane (PG) of said three distance sensors (6);
- a second calculation module (9) programmed for comparing said lying plane (PG) with a reference plane (PR) and for calculating, for each appendage (4) of said hydrofoil (1), a corresponding movement position (PM) in order to move said lying plane (PG) substantially parallel to said reference plane (PR);
- a driving module (10) configured for receiving each said movement position (PM) and generating a corresponding driving signal (SC) in order to drive the actuator means (5) of said appendages (4) to independently move each said appendage (4) at least in partial rotation around a corresponding first rotation axis (Y), orthogonal to the main extension axis (X), in order to reach the corresponding said movement position (PM).

## Patentansprüche

1. Verfahren zur Steuerung der Position eines Tragflügelboots (1), welches Tragflügelboot (1) Folgendes umfasst:
- einen Rumpf (2), der mit mindestens einer Hauptverlaufsachse (X) versehen ist;
- mindestens zwei Fortsätze (4), die am genannten Rumpf (2) drehbar gelagert sind und nach unten in Bezug auf den genannten Rumpf (2) vorstehen;
- Stellmittel (5), die mit den genannten Fortsätzen (4) mechanisch verbunden sind, um sie in Bezug auf den genannten Rumpf (2) zu bewegen;
wobei das genannte Steuerungsverfahren **dadurch gekennzeichnet ist, dass** es Folgendes vorsieht:
- einen Erfassungsschritt, bei dem mindestens drei Entfernungssensoren (6), die an einer Außenfläche des genannten Rumpfs (2) in drei unterschiedlichen Positionen mechanisch montiert sind, drei entsprechenden Entfernungen zwischen den genannten Entfernungssensoren (6) und mindestens drei entsprechenden Stellen auf dem Freispiegel des Wassers erfassen und drei entsprechenden Entfernungssignale (SD) erzeugen;
- einen ersten Berechnungsschritt, bei dem eine elektronische Steuereinheit (7) die genannten drei Entfernungssignale (SD) empfängt und eine Lageebene (PG) der genannten drei Entfernungssensoren (6) berechnet;
- einen zweiten Berechnungsschritt, bei dem die genannte elektronische Steuereinheit (7) die genannte Lageebene (PG) mit einer Bezugsebene (PR) vergleicht und eine Bewegungsposition (PM) berechnet, in der jeder genannte Fortsatz (4) bewegt werden soll, bis die genannte, von den genannten Entfernungssensoren (6) definierte Lageebene (PG) wesentlich parallel zur genannten Bezugsebene (PR) liegt;
- einen Befehlsschritt, bei dem die genannte elektronische Steuereinheit (7) ein Befehlssignal (SC) erzeugt, um den genannten Stellmitteln (5) zu befehlen, jeden genannten Fortsatz (4) um eine entsprechende erste Drehachse (Y) orthogonal zur genannten Hauptverlaufsachse (X) zu bewegen;
- einen Bewegungsschritt, bei dem die genannten Stellmittel (5) jeden genannten Fortsatz (4) bewegen, um die entsprechende genannte Bewegungsposition (PM) unabhängig von der anderen der genannten mindestens zwei Fortsätze (4) zu erreichen.

2. Steuerungsverfahren gemäß Anspruch 1, **dadurch gekennzeichnet, dass** die genannten Entfernungssensoren (6) Sonarsensoren sind.

3. Steuerungsverfahren gemäß Anspruch 1 oder 2, **dadurch gekennzeichnet, dass** der genannte Erfassungsschritt das Erfassen von drei verschiedenen Vielzahlen von Entfernungen zwischen den genannten drei Entfernungssensoren (6) und drei entsprechenden Vielzahlen von Stellen auf dem Freispiegel des Wassers vorsieht;
wobei jedes genannte Entfernungssignal (SD), das von jedem der genannten Entfernungssensoren (6) erzeugt wird, eine Höhenkarte eines Flächenanteils des Freispiegels des Wassers definiert.

4. Steuerungsverfahren gemäß Anspruch 3, **dadurch gekennzeichnet, dass** bei dem genannten ersten Berechnungsschritt die genannte elektronische Steuereinheit (7) die Gestaltung der Wasserfläche abhängig von der Vielzahlen von Entfernungen, die von den genannten drei Entfernungssensoren (6) erfasst werden, berechnet und einen entsprechenden Korrekturfaktor (FC) erzeugt;
wobei das genannte Steuerungsverfahren einen Verarbeitungsschritt weiter vorsieht, der zwischen dem genannten ersten Berechnungsschritt und dem genannten zweiten Berechnungsschritt operativ angeordnet ist, bei dem die genannte elektronische Steuereinheit (7) die genannte Lageebene (PG) korrigiert, indem sie den genannten Korrekturfaktor (PC) anwendet, und eine entsprechende korrigierte Lageebene (PGC) erhält;
wobei bei dem genannten zweiten Berechnungsschritt die genannte elektronische Steuereinheit (7) die genannte korrigierte Lageebene (PGC) mit der genannten Bezugsebene (PR) vergleicht, um die genannte Bewegungsposition (PM) für jeden genannten Fortsatz (4) zu berechnen.

5. Steuerungsverfahren gemäß Anspruch 4, **dadurch gekennzeichnet, dass** bei dem genannten ersten Berechnungsschritt die genannte elektronische Steuereinheit (7) Höhenänderungen der genannten Freispiegelfläche des Wassers bestimmt und den genannten Korrekturfaktor (FC) als eine Funktion der zeitlichen Änderung der genannten Gestaltung der Wasserfläche aufgrund der genannten Höhenänderungen berechnet.

6. Steuerungsverfahren gemäß Anspruch 4 oder 5, **dadurch gekennzeichnet, dass** die genannten Stellmittel (5) dazu geeignet sind, jeden genannten Fortsatz (4) mindestens in Teildrehung um eine zweite Drehachse (Z) wesentlich parallel zur Hauptverlaufsachse (X) zu bewegen, zwischen:
- einer gesenkten Position, bei der der genannte Fortsatz (4) nach unten in Bezug auf den genannten Rumpf (2) vorsteht, und
- einer angehobenen Position, bei der der genannte Fortsatz (4) neben dem genannten Rumpf (2) angeordnet ist;
wobei das genannte Verfahren **dadurch gekennzeichnet ist, dass**:
- bei dem genannten ersten Berechnungsschritt die genannte elektronische Steuereinheit (7) die genannte Gestaltung der Wasserfläche mit einer Grenzgestaltung vergleicht und ein Notsignal (SE) erzeugt, falls die genannte Gestaltung der Wasserfläche die genannte Grenzgestaltung übersteigt;
- bei dem genannten Befehlsschritt die genannte elektronische Steuereinheit (7) einen Notbefehl (CE) erzeugt, um den genannten Stellmitteln (5) zu befehlen, jeden genannten Fortsatz (4) in der genannten angehobenen Position bei dem genannten Notsignal (SE) zu bewegen.

7. Steuerungsverfahren gemäß einem beliebigen der vorherigen Ansprüche, **dadurch gekennzeichnet, dass** bei dem genannten Bewegungsschritt jeder genannte Fortsatz (4) kontinuierlich bewegt wird, bis die genannte Bewegungsposition (PM) erreicht wird.

8. Steuerungsverfahren gemäß einem beliebigen der vorherigen Ansprüche, **dadurch gekennzeichnet, dass** die genannten Erfassungs-, Berechnungs- und Befehlsschritte bei einer Frequenz von 200 Hz bis 6 kHz durchgeführt werden.

9. Tragflügelboot (1), umfassend:
- einen Rumpf (2), der mit mindestens einer Hauptverlaufsachse (X) versehen ist;
- mindestens zwei Fortsätze (4), die am genannten Rumpf (2) drehbar gelagert sind und nach unten in Bezug auf den genannten Rumpf (2) vorstehen;
- Stellmittel (5), die mit den genannten Fortsätzen (4) mechanisch verbunden sind, um sie in Bezug auf den genannten Rumpf (2) zu bewegen;
- eine Steuerungsvorrichtung, umfassend:
- mindestens einen Entfernungssensor (6), der an einer Außenfläche des genannten Rumpfs (2) mechanisch montiert und dazu konfiguriert ist, die Entfernung zwischen dem genannten Entfernungssensor (6) und einer entsprechenden Stelle auf dem Freispiegel des Wassers zu erfassen und einen entsprechenden Entfernungssignal (SD) zu erzeugen,
- mindestens eine elektronische Steuereinheit (7), die am genannten Rumpf (2) montiert und mit dem genannten Entfernungssensor (6) und mit den genannten Stellmitteln (5) in Datenkommunikation gesetzt ist;
wobei das genannte Tragflügelboot (1) **dadurch gekennzeichnet ist, dass:**
- die genannte Stellmittel (5) dazu geeignet sind, jeden genannten Fortsatz (4) mindestens in Teildrehung um eine entsprechende erste Drehachse (Y) orthogonal zur genannten Hauptverlaufsachse (X) zu bewegen; wobei die genannten Stellmittel (5) geeignet sind, jeden der genannten mindestens zwei Fortsätze (4) unabhängig vom anderen der genannten mindestens zwei Fortsätze (4) zu bewegen;
- wobei die genannte Steuerungsvorrichtung mindestens drei Entfernungssensoren (6) umfasst, die an der Außenfläche des genannten Rumpfs (2) in drei unterschiedlichen Positionen mechanisch montiert und dazu konfiguriert sind, die Entfernung zwischen den genannten Entfernungssensoren (6) und mindestens drei entsprechenden Stellen auf dem Freispiegel des Wassers zu erfassen und drei entsprechenden Entfernungssignale (SD) zu erzeugen;
- wobei die genannte elektronische Steuereinheit (7) mit Folgendem versehen ist:
- ein erstes Berechnungsmodul (8), das dazu programmiert ist, die genannten, von den genannten drei Entfernungssensoren (6) erzeugten Entfernungssignale (SD) zu empfangen und eine entsprechende Lageebene (PG) der genannten drei Entfernungssensoren (6) zu berechnen,
- ein zweites Berechnungsmodul (9), das dazu programmiert ist, die genannte Lageebene (PG) mit einer Bezugsebene (PR) zu vergleichen und eine entsprechende Bewegungsposition (PM) für jeden genannten Fortsatz (4) zu berechnen, um die genannte Lageebene (PG) wesentlich parallel zur genannten Bezugsebene (PR) zu bewegen,
- ein Befehlsmodul (10), das dazu konfiguriert ist, jede genannte Bewegungsstellung (PM) zu empfangen und ein entsprechendes Befehlssignal (SC) zu erzeugen, um den genannten Stellmitteln (5) zu befehlen, jeden genannten Fortsatz (4) um die entsprechende erste Drehachse (Y) zu bewegen, um die entsprechende genannte Bewegungsposition (PM) zu erreichen.

10. Vorrichtung zur Steuerung der Position eines Tragflügelboots (1), welche Vorrichtung Folgendes umfasst:
- einen Entfernungssensor (6), der dazu bestimmt ist, an einer Außenfläche eines Rumpfs (2) des genannten Tragflügelboots (1) mechanisch montiert zu werden, und dazu konfiguriert ist, mindestens eine Entfernung zwischen dem genannten Entfernungssensor (6) und einer Stelle auf dem Freispiegel des Wassers zu erfassen und einen entsprechenden Entfernungssignal (SD) zu erzeugen;
- mindestens eine elektronische Steuereinheit (7), die dazu bestimmt ist, am genannten Rumpf (2) montiert und mit dem genannten Entfernungssensor (6) und mit Stellmitteln (5) von mindestens zwei Fortsätzen (4) des genannten Tragflügelboots (1) in Datenkommunikation gesetzt zu werden;
wobei die genannte Steuerungsvorrichtung **dadurch gekennzeichnet ist, dass** sie mindestens drei der genannten Entfernungssensoren (6) umfasst, die dazu bestimmt sind, an der Außenfläche des genannten Rumpfs (2) in entsprechenden drei unterschiedlichen Positionen mechanisch montiert zu werden, und dazu konfiguriert sind, die Entfernung zwischen den genannten Entfernungssensoren (6) und mindestens drei entsprechenden Stellen auf dem Freispiegel des Wassers zu erfassen und drei entsprechenden Entfernungssignale (SD) zu erzeugen;
und dass die genannte elektronische Steuereinheit (7) mit Folgendem versehen ist:
- ein erstes Berechnungsmodul (8), das dazu programmiert ist, die genannten, von den genannten drei Entfernungssensoren (6) erzeugten Entfernungssignale (SD) zu empfangen und eine entsprechende Lageebene (PG) der genannten drei Entfernungssensoren (6) zu berechnen;
- ein zweites Berechnungsmodul (9), das dazu programmiert ist, die genannte Lageebene (PG) mit einer Bezugsebene (PR) zu vergleichen und für jeden Fortsatz (4) des genannten Tragflügelboots (1) eine entsprechende Bewegungsposition (PM) zu berechnen, um die genannte Lageebene (PG) wesentlich parallel zur genannten Bezugsebene (PR) zu bewegen;
- ein Befehlsmodul (10), das dazu konfiguriert ist, jede genannte Bewegungsposition (PM) zu empfangen und ein entsprechendes Befehlssignal (SC) zu erzeugen, um den Stellmitteln (5) der genannten Fortsätze (4) zu befehlen, unabhängig jeden genannten Fortsatz (4) mindestens in Teildrehung um eine entsprechende erste Drehachse (Y) orthogonal zur Hauptverlaufsachse (X) zu bewegen, um die entsprechende genannte Bewegungsposition (PM) zu erreichen.

## Revendications

1. Procédé de réglage de la position d'une aile portante (1), ladite aile portante (1) comprenant :
- une coque (2) munie d'au moins un axe de développement principal (X) ;
- au moins deux foils (4), montés de manière rotative sur ladite coque (2) et faisant saillie vers le bas par rapport à ladite coque (2) ;
- des moyens d'actionnement (5) reliés mécaniquement auxdits foils (4) pour les mouvoir par rapport à ladite coque (2) ;
ledit procédé de réglage étant **caractérisé en ce qu'**il prévoit :
- une étape de détection, dans laquelle au moins trois capteurs de distance (6), montés mécaniquement sur une surface extérieure de ladite coque (2) dans trois positions distinctes, détectent trois distances correspondantes entre lesdits capteurs de distance (6) et au moins trois points correspondants sur la surface libre de l'eau et ils génèrent trois signaux de distance correspondants (SD) ;
- une première étape de calcul, dans laquelle une unité de commande électrique (7) reçoit lesdits trois signaux de distance (SD) et calcule un plan de pose (PG) desdits trois capteurs de distance (6) ;
- une seconde étape de calcul, dans laquelle ladite unité de commande électrique (7) compare ledit plan de pose (PG) avec un plan de repère (PR) et calcule une position de mouvement (PM) dans laquelle il faut déplacer chaque foil (4) jusqu'à ce que ledit plan de pose (PG) défini par lesdits capteurs de distance (6) ne soit sensiblement parallèle audit plan de repère (PR) ;
- une étape de contrôle, dans laquelle ladite unité de commande électrique (7) génère un signal de commande (SC) pour commander auxdits moyens d'actionnement (5) de déplacer chaque foil (4) autour d'un premier axe de rotation correspondant (Y) orthogonal audit axe de développement principal (X) ;
- une étape de mouvement dans laquelle lesdits moyens d'actionnement (5) déplacent chaque foil (4) pour atteindre ladite position de mouvement correspondante (PM) de manière indépendante par rapport à l'autre desdits au moins deux foils (4).

2. Procédé de réglage selon la revendication 1, **caractérisé en ce que** lesdits capteurs de distance (6) sont des capteurs sonar.

3. Procédé de réglage selon la revendication 1 ou 2, **caractérisé en ce que** ladite étape de détection prévoit la détection de trois différentes pluralités de distances entre lesdits capteurs de distance (6) et trois pluralités de points correspondants sur la surface libre de l'eau ;
chaque signal de distance (SD) généré par chacun desdits capteurs de distance (6) définissant une carte d'altitude d'une partie de superficie de la surface libre de l'eau.

4. Procédé de réglage selon la revendication 3, **caractérisé en ce que**, dans ladite première étape de calcul, ladite unité de commande électrique (7) calcule la conformation de la superficie de l'eau en fonction des pluralités de distances détectées par lesdits capteurs de distance (6) et elle génère un coefficient correcteur (FC) ;
ledit procédé de réglage prévoyant en outre une étape d'élaboration, interposée fonctionnellement entre ladite première étape de calcul et ladite seconde étape de calcul, dans laquelle ladite unité de commande électrique (7) corrige ledit plan de pose (PG) en appliquant ledit coefficient correcteur (FC) et obtient un plan de pose correspondant (PGC) ;
dans ladite seconde étape de calcul, ladite unité de commande électrique (7)comparant ledit plan de pose corrigé (PGC) avec ledit plan de repère (PR) pour calculer ladite position de mouvement (PM) pour chaque foil (4).

5. Procédé de réglage selon la revendication 4, **caractérisé en ce que**, dans ladite première étape de calcul, ladite unité de commande électrique (7) détermine des variations d'altitude de ladite superficie de la surface libre de l'eau et calcule ledit coefficient correcteur (FC) par une fonction de la variation dans le temps de ladite conformation de la superficie de l'eau due auxdites variations d'altitude.

6. Procédé de réglage selon la revendication 4 ou 5, dans lequel lesdits moyens d'actionnement (5) sont aptes à déplacer chaque foil (4) en rotation au moins partielle autour d'un second axe de rotation (Z), sensiblement parallèle à l'axe de développement principal (X) entre :
- une position abaissée, dans laquelle ledit foil (4) fait saillie vers le bas par rapport à ladite coque (2), et
- une position soulevée, dans laquelle ledit foil (4) et la dite coque (2) sont disposés côte à côte ; ledit procédé étant **caractérisé en ce que** :
- dans ladite première étape de calcul, ladite unité de commande électrique (7) compare ladite conformation de la superficie de l'eau avec une conformation limite et génère un signal d'alerte (SE) dans le cas où ladite conformation de la superficie de l'eau dépasse ladite conformation limite ;
- dans ladite étape de contrôle, ladite unité de commande électrique (7) génère une commande d'alerte (CE) pour commander auxdits moyens d'actionnement (5) de déplacer chaque foil (4) dans ladite position soulevée au moment de l'émission dudit signal d'alerte (SE).

7. Procédé de réglage selon l'une quelconque des revendications précédentes, **caractérisé en ce que**, dans ladite étape de mouvement, chaque foil (4) est déplacé de manière continue jusqu'à ce qu'il n'atteint ladite position de mouvement (PM).

8. Procédé de réglage selon l'une quelconque des revendications précédentes, **caractérisé en ce que** lesdites étapes de détection, calcul et contrôle sont effectuées à une fréquence comprise entre 200 Hz et 6 kHz.

9. Aile portante (1) comprenant :
- une coque (2) munie d'au moins un axe de développement principal (X) ;
- au moins deux foils (4), montés de manière rotative sur ladite coque (2) et faisant saillie vers le bas par rapport à ladite coque (2) ;
- des moyens d'actionnement (5) reliés mécaniquement auxdits foils (4) pour les mouvoir par rapport à ladite coque (2) ;
- un appareil de réglage comprenant :
- au moins un capteur de distance (6) monté mécaniquement sur une surface extérieure de ladite coque (2) et configuré pour détecter la distance entre ledit capteur de distance (6) et un point correspondant sur la surface libre de l'eau et pour générer un signal de distance correspondant (SD),
- au moins une unité de commande électronique (7), montée sur ladite coque (2) et mise en communication de données avec ledit capteur de distance (6) et avec lesdits moyens d'actionnement (5) ;
ladite aile portante (1) étant **caractérisée en ce que** :
- lesdits moyens d'actionnement (5) sont aptes à déplacer chaque foil (4) en rotation au moins partielle autour d'un premier axe de rotation correspondant (Y), orthogonal audit axe de développement principal (X) ; lesdits moyens d'actionnement (5) étant aptes à déplacer chacun desdits au moins deux foils (4) de manière indépendante par rapport à l'autre desdits au moins deux foils (4) ;
- ledit appareil de réglage comprend au moins trois capteurs de distance (6), montés mécaniquement sur la surface extérieure de ladite coque (2) dans trois positions distinctes correspondantes et configurés pour détecter la distance entre lesdits capteurs de distance (6) et au moins trois points correspondants sur la surface libre de l'eau et pour générer trois signaux de distance correspondants (SD) ;
- ladite unité de commande électronique (7) est munie de :
- un premier module de calcul (8) programmé pour recevoir lesdits signaux de distance (SD) générés par lesdits trois capteurs de distance (6) et pour calculer un plan de pose correspondant (PG) desdits trois capteurs de distance (6),
- un second module de calcul (9) programmé pour comparer ledit plan de pose (PG) avec un plan de repère (PR) et pour calculer une position de mouvement correspondante (PM) pour chaque foil (4) afin de déplacer ledit plan de pose (PG) de façon sensiblement parallèle audit plan de repère (PR),
- un module de commande (10) configuré pour recevoir chaque position de mouvement (PM) et générer un signal de commande correspondant (SC) pour commander auxdits moyens d'actionnement (5) de déplacer chaque foil (4) autour dudit premier axe de rotation correspondant (Y) pour atteindre ladite position de mouvement correspondante (PM).

10. Appareil de réglage de la position d'une aile portante (1), ledit appareil de réglage comprend :
- un capteur de distance (6) destiné à être monté mécaniquement sur une surface extérieure d'une coque (2) de ladite aile portante (1) et configuré pour détecter au moins une distance entre ledit capteur de distance (6) et un point sur la surface libre de l'eau et pour générer un signal de distance correspondant (SD) ;
- au moins une unité de commande électronique (7), destinée à être montée sur ladite coque (2) et mise en communication de données avec ledit capteur de distance (6) et avec des moyens d'actionnement (5) d'au moins deux foils (4) de ladite aile portante (1) ;
ledit appareil de réglage étant **caractérisé en ce qu'**il comprend au moins trois desdits capteurs de distance (6) destinés à être montés mécaniquement sur la surface extérieure de ladite coque (2) dans trois positions distinctes correspondantes et configurés pour détecter la distance entre lesdits capteurs de distance (6) et au moins trois points correspondants sur la surface libre de l'eau et pour générer trois signaux de distance correspondants (SD) ;
et **en ce que** ladite unité de commande électronique (7) est munie de :
- un premier module de calcul (8) programmé pour recevoir lesdits signaux de distance (SD) générés par lesdits trois capteurs de distance (6) et pour calculer un plan de pose correspondant (PG) desdits trois capteurs de distance (6) ;
- un second module de calcul (9) programmé pour comparer ledit plan de pose (PG) avec un plan de repère (PR) et pour calculer pour chaque foil (4) de ladite aile portante (1) une position de mouvement correspondante (PM) afin de déplacer ledit plan de pose (PG) de façon sensiblement parallèle audit plan de repère (PR) ;
- un module de commande (10) configuré pour recevoir chaque position de mouvement (PM) et générer un signal de commande correspondant (SC) pour commander auxdits moyens d'actionnement (5) desdits foils (4) de déplacer de manière indépendante chaque foil (4) en rotation au moins partielle autour dudit premier axe de rotation correspondant (Y), orthogonal à l'axe de développement principal (X) pour atteindre ladite position de mouvement correspondante (PM).
